Europäisches Patentamt

European Patent Office

Office européen des brevets

(19)

(11) Veröffentlichungsnummer: **0 471 197 A1**

# (12) EUROPÄISCHE PATENTANMELDUNG

(21) Anmeldenummer: **91111895.8**

(22) Anmeldetag: **17.07.91**

(51) Int. Cl.5: **B23B 31/26**

(30) Priorität: **15.08.90 DE 9011831 U**

(43) Veröffentlichungstag der Anmeldung:
**19.02.92 Patentblatt 92/08**

(84) Benannte Vertragsstaaten:
**CH DE ES FR GB IT LI SE**

(71) Anmelder: **Ott Maschinentechnik GmbH**
**Jägerstrasse 4-12**
**W-8960 Kempten(DE)**

(72) Erfinder: **Friedl, Franz**
**Egatweg 7**
**W-8952 Marktoberdorf(DE)**
Erfinder: **Heel, Helmut**
**Andreas-Mayer-Strasse 82 1/8**
**W-8951 Lengenwang(DE)**

(74) Vertreter: **Liebau, Gerhard, Dipl.-Ing.**
**Birkenstrasse 39 Postfach 22 02 29**
**W-8900 Augsburg 22(DE)**

(54) Spannvorrichtung zum axialen Spannen zweier voneinander lösbarer Maschinenteile.

(57) Bei einer Spannvorrichtung zum axialen Spannen zweier voneinander lösbarer Maschinenteile sind an dem ersten Maschinenteil (1) ein hohler Zentrier-Ansatz (3), eine den Ansatz umgebende Anlagefläche (6) sowie eine innen im Ansatz (3) eingearbeitete Ringnut (8) vorgesehen, die eine sich zum freien Ansatzende hin konisch verjüngende Nutflanke (9) aufweist. Das zweite Maschinenteil (2) weist eine dem Ansatz (3) angepaßte Aufnahmebohrung (4) auf, die von einer Stirnfläche (7) umgeben ist, an welche die Anlagefläche (6) anpreßbar ist. Im zweiten Maschinenteil sind mehrere Spannklauen (10) vorgesehen, die sich jeweils mit ihrem einen ersten Ende (10a) an einer Nutflanke (12) im zweiten Maschinenteil (2) abstützen. Radial innerhalb der Spannklauen (10) ist axial beweglich eine Spannhülse (15) angeordnet, die im Bereich der beiden Enden (10a, 10b)

der Spannklauen (10) je einen Spannkegel (17, 18) aufweist, mit dem die Spannklauen (10) parallel zu sich selbst radial nach außen bewegbar und ihre Enden (10a, 10b) an die zugehörigen Nutflanken (9, 12) anpreßbar sind. Jeder Spannkegel (17, 18) weist zwei zueinander axial versetzte konische Flächenabschnitte (17a, 17b; 18a, 18b) auf, die beim Spannvorgang mit den Innenflächen der Spannklauenenden (10b, 10a) zusammenwirken. Zwischen den beiden konischen Flächenabschnitten (17a, 17b; 18a, 18b) ist ein zylindrischer Flächenabschnitt (17c) vorgesehen, dessen Durchmesser so groß ist, daß die Spannklauenenden (10b) selbsttätig in Eingriffsstellung mit der Nutflanke (9) gehalten werden, wenn ein bestimmter Abschnitt (20c) ihrer Innenflächen an dem zylindrischen Flächenabschnitt (17c) anliegen.

Fig. 1

Die Erfindung betrifft eine Spannvorrichtung zum axialen Spannen zweier voneinander lösbarer Maschinenteile, insbesondere zum Spannen eines Werkzeugteiles in einer Werkzeugaufnahme, mit einem an dem ersten Maschinenteil (Werkzeug) vorgesehenen kegeligen oder zylindrischen, hohlen Zentrier-Ansatz, einer an den Ansatz anschließenden, senkrecht zur Zentralachse der Spannvorrichtung verlaufenden Anlagefläche, sowie einer innen im Ansatz vorgesehenen Ringnut, die eine sich zum freien Ansatzende hin konisch verjüngende Nutflanke aufweist, mit einer im zweiten Maschinenteil (Werkzeugaufnahme) vorgesehenen, dem Ansatz angepaßten Aufnahmebohrung, an die sich eine senkrecht zur Zentralachse erstreckende Stirnfläche anschließt, an welche die Anlagefläche anpreßbar ist, mit mehreren im zweiten Maschinenteil im wesentlichen parallel zur Zentralachse angeordneten Spannklauen, die sich jeweils mit ihrem einen, ersten Ende an einer Nutflanke einer im zweiten Maschinenteil vorgesehenen Ringnut abstützen, sowie mit einer im zweiten Maschinenteil axial beweglichen, radial innerhalb der Spannklauen angeordneten Spannhülse, die zumindest im Bereich der zweiten Enden der Spannklauen einen Spannkegel aufweist, dessen konische Mantelfläche zwei zueinander axial versetzte konische Flächenabschnitte aufweist, die beim Spannvorgang mit den der Zentralachse zugewandten Innenflächen der Spannklauenenden zusammenwirken, und mittels dem die zweiten Enden der Spannklauen radial nach außen bewegbar und an die Nutflanke des Ansatzes anpreßbar sind.

Eine Spannvorrichtung dieser Art ist aus der DE 38 14 550 C1 und in ähnlicher Bauweise auch aus der DE 38 07 140 A1 bekannt. Bei derartigen Spannvorrichtungen kann es vorkommen, daß bei überhöhten, auf das erste Maschinenteil wirkenden Kräften, sich dieses unter Überwindung der auf die Spannhülse wirkenden Spannkraft vom zweiten Maschinenteil löst. Dies kann z.B. der Fall sein, wenn bei überhöhten Schnittkräften, zu hohen Unwuchten, oder beim ungewollten Zusammenstoß von Werkzeug und Werkstück übergroße Kräfte an einem Werkzeug auftreten, die dann das Werkzeug aus der Werkzeugaufnahme, z.B. einer Werkzeugmaschinenspindel, herausreißen. Die übergroßen Kräfte können als Auszugs- oder Kippkräfte auf das Werkzeug einwirken und wirken entgegen der durch die Spannklauen erzeugten Spannkraft. Bei überhöhten Kräften werden durch die konische Nutflanke der Ringnut die freien Enden der Spannklauen radial nach innen zur Zentralachse hin gedrückt. Die Innenflächen der Spannklauenenden drücken ihrerseits auf den einen konischen Flächenabschnitt des Spannkegels, wodurch infolge der Neigung, mit der dieser konische Flächenabschnitt gegenüber der Zentralachse geneigt ist, auch in Achsrichtung wirkende Kraftkomponenten erzeugt werden. Diese in Achsrichtung wirkenden Kraftkomponenten wirken der auf die Spannhülse wirkenden Spannkraft, beispielsweise eines Tellerfederpaketes, entgegen und überwinden schließlich die Spannkraft desselben. Hierdurch kann sich die Spannhülse axial verschieben und die Spannvorrichtung lösen. Durch das Freiwerden des ersten Maschinenteiles kann erheblicher Schaden entstehen, wenn beispielsweise sich ein schweres Werkzeug bei hoher Drehzahl löst.

Der Erfindung liegt daher die Aufgabe zugrunde, eine Spannvorrichtung zum axialen Spannen zweier voneinander lösbarer Maschinenteile, insbesondere zum Spannen eines Werkzeugteiles in einer Werkzeugaufnahme, der eingangs erwähnten Art zu schaffen, bei der in einfacher Weise ein ungewolltes Lösen der beiden Maschinenteile unter überhöhten Kräften mit Sicherheit vermieden wird.

Dies wird nach der Erfindung dadurch erreicht, daß zwischen den beiden konischen Flächenabschnitten ein zylindrischer Flächenabschnitt vorgesehen ist, dessen Durchmesser so groß ist, daß die Spannklauenenden selbsttätig in Eingriffsstellung (Sperrstellung) mit der Nutflanke der Ringnut des ersten Maschinenteiles gehalten werden, wenn ein bestimmter Abschnitt ihrer Innenflächen an dem zylindrischen Flächenabschnitt anliegt.

Durch den zwischen den beiden konischen Flächenabschnitten vorgesehenen zylindrischen Flächenabschnitt wird ein ungewolltes Lösen der beiden Maschinenteile bei überhöhten Kräften wirksam vermieden. Treten derartige überhöhte Kräfte auf, dann bewirkt die konische Nutflanke der Ringnut zwar ebenfalls, daß die Spannklauenenden radial nach innen zur Zentralachse hin gedrückt werden. Hierdurch kann infolge der konischen Neigung des Flächenabschnittes, an welche ihre Innenflächen in Spannstellung anliegen, auch die Spannhülse infolge der axial gerichteten Kraftkomponenten unter Überwindung der auf die Spannhülse wirkenden Spannkraft, z.B. eines Tellerfederpaketes, verschoben werden. Durch axiale Verschiebung der Spannhülse kommen die Spannklauen an dem zylindrischen Flächenabschnitt zur Anlage. Da die Mantellinien dieses zylindrischen Flächenabschnittes parallel zur Zentralachse verlaufen, können bei Anlage der Innenflächen an dem zylindrischen Flächenabschnitt keine axialen Kraftkomponenten mehr entstehen, so daß eine weitere ungewollte Verschiebung der Spannhülse vermieden wird. Die Spannklauen sind damit durch den zylindrischen Flächenabschnitt gegen weitere radiale Bewegung nach innen zur Zentralachse hin gesperrt. Da der Durchmesser des zylindrischen Flächenabschnittes so groß gewählt ist, daß sich die Spannklauenenden noch in Eingriffsstellung mit der Nutflanke der Ringnut befinden, die Spannklauenenden aber gegen weitere radiale Bewegung nach innen gesperrt sind, kann sich das erste Maschinenteil nicht vom zweiten Maschinenteil lösen. Die Verbindung zwischen beiden Maschinenteilen ist zwar in Sperrstellung etwas gelockert, jedoch ist ein völliges Lösen beider Maschinenteile unmöglich. Hierdurch wird eine maximale Sicherheit erreicht, was insbesondere bei mit hoher Drehzahl rotierenden Werkzeugen von wesentlichem Vorteil ist. Die erfindungsgemäße Ausgestaltung hat nicht nur den Vorteil, daß bei überhöhten Kräften ein ungewolltes Lösen der beiden Maschinenteile vermieden wird, sondern auch dann, wenn in ungewollter Weise die auf die Spannhülse wirkende Spannkraft durch Versagen eines Maschinenelementes, beispielsweise Federbruch, nachläßt oder ausfällt.

Weitere vorteilhafte Ausgestaltungen der Erfindung sind in den Unteransprüchen gekennzeichnet.

Die Erfindung ist in folgendem, anhand eines in der Zeichnung dargestellten Ausführungsbeispieles, näher erläutert Es zeigen:

Figur 1
einen Axialschnitt der Spannvorrichtung, unten in gespannter Stellung, oben in gelöster Stellung,

Figur 2, 3 und 4
Einzelheiten der Spannhülse, einer Spannklaue und der mit dieser zusammenwirkenden Maschenteile in gelöster, gespannter und gesperrter Stellung.

In der Zeichnung ist mit 1 ein erstes Maschinenteil bezeichnet, welches mit dem zweiten Maschinenteil 2 über die Spannvorrichtung verbunden werden soll. Beispielsweise kann es sich bei dem ersten Maschinenteil 1 um ein Werkzeug und bei dem zweiten Maschinenteil 2 um eine Werkzeugmaschinenspindel handeln. Die erfindungsgemäße Spannvorrichtung ist jedoch auch zur Verbindung anderer Maschinenteile geeignet, beispielsweise zur Verbindung eines Fräskopfes an einem Frässchlitten, zur Verbindung zweier Werkzeugmaschinentische untereinander, oder zur Verbindung von Aufspannvorrichtungen für Werkstücke mit Werkzeugmaschinentischen oder dgl..

Das erste Maschinenteil 1 kann einen kegelförmigen oder zylindrischen Zentrier-Ansatz 3 aufweisen, mit dem es in eine entsprechend angepaßte Aufnahmebohrung 4 im zweiten Maschinenteil 2 einsetzbar ist. Die Art der Zentrierung zwischen den beiden Maschinenteilen 1, 2 ist für die vorliegende Erfindung ohne wesentliche Bedeutung. Die Aufnahmebohrung 4 kann in dem zweiten Maschinenteil 2 auch direkt vorgesehen sein.

Der Ansatz 3 ist von einer senkrecht zur Ansatzachse bzw. Zentralachse A der Spannvorrichtung verlaufenden Anlagefläche 6 umgeben, die an eine sich ebenfalls senkrecht zur Zentralachse A erstreckende, die Aufnahmebohrung 4 umgebende Stirnfläche 7 anpreßbar ist. Der hohl ausgebildete Ansatz 3 ist mit einer Ringnut 8 versehen, die eine sich zum freien Ansatzende hin konisch verjüngende Nutflanke 9 aufweist. Die Nutflanke 9 wird durch eine Konusfläche gebildet.

Konzentrisch zur Zentralachse A sind in gleichen Umfangswinkelabständen mehrere Spannklauen 10, beispielsweise acht, angeordnet, die sich im wesentlichen parallel zur Zentralachse erstrecken. Am ersten Ende 10a jeder Spannklaue 10 ist eine durch einen konischen Flächenabschnitt gebildete Spannfläche 11 vorgesehen. Diese Spannfläche 11 stützt sich an einer Nutflanke 12 einer im zweiten Maschinenteil 2 vorgesehenen Ringnut 13 ab. Die Ringnut 13 und die Nutflanke 12 sind zweckmäßig unmittelbar an dem zweiten Maschinenteil 2 angeordnet. Die Nutflanke 12 ist eine Konusfläche und gegenüber der Zentralachse A im gleichen Winkel $\beta$ geneigt wie die Spannfläche 11. Das zweite Ende 10b jeder Spannklaue ist mit einer entgegengesetzt gerichteten Spannfläche 14 versehen, die ebenfalls durch einen konischen Flächenabschnitt gebildet wird und die gegenüber der Zentralachse A in einem Winkel $\beta$ 1 geneigt ist, der dem Neigungswinkel der Nutflanke 9 gegenüber der Zentralachse A entspricht. Die Winkel $\beta$ und $\beta$ 1 sind zweckmäßig gleich groß ausgebildet, sie können jedoch gegebenenfalls auch voneinander abweichen.

Radial innerhalb der Spannklauen 10 ist eine Spannhülse 15 vorgesehen, die mit einer Betätigungsstange 16 fest verschraubt ist. Die Spannhülse 15 weist im Bereich der zweiten Enden 10b der Spannklauen einen Spannkegel 17 auf. Ein weiterer Spannkegel 18 ist im Bereich der ersten Enden 10a der Spannklauen 10 vorgesehen. Jeder der Spannkegel weist zwei in unterschiedlichen Winkeln gegenüber der Zentralachse A geneigte und axial zueinander versetzte, konische Flächenabschnitte 17a, 17b bzw. 18a, 18b auf, von denen die jeweils näher zur Stirnfläche 7 liegenden Flächenabschnitte 17b, 18b einen kleineren Winkel mit der Zentralachse A einschließen, als die jeweils entfernter liegenden anderen Flächenabschnitte 17a, 18a.

Ferner sind am freien Ende des Ansatzes 3 des ersten Maschinenteiles 1 mehrere axial vorspringende Mitnehmerzapfen 19 vorgesehen, die in entsprechende Mitnehmerausnehmungen im zweiten Maschinenteil 2 eingreifen. Diese Mitnehmerzapfen 19 und Mitnehmerausnehmungen sind zur Übertragung des Drehmomentes vorgesehen, soweit dieses nicht durch Reibschluß der aneinandergepreßten Flächen, insbesondere der Anlagefläche 6 und der Stirnfläche 7 der beiden Maschinenteile 1, 2 übertragen werden. Der Ansatz 3 könnte gegebenenfalls auch mit Mitnehmerausnehmungen versehen sein, in welche mit dem zweiten Maschinenteil 2 verbundene Mitnehmersteine eingreifen.

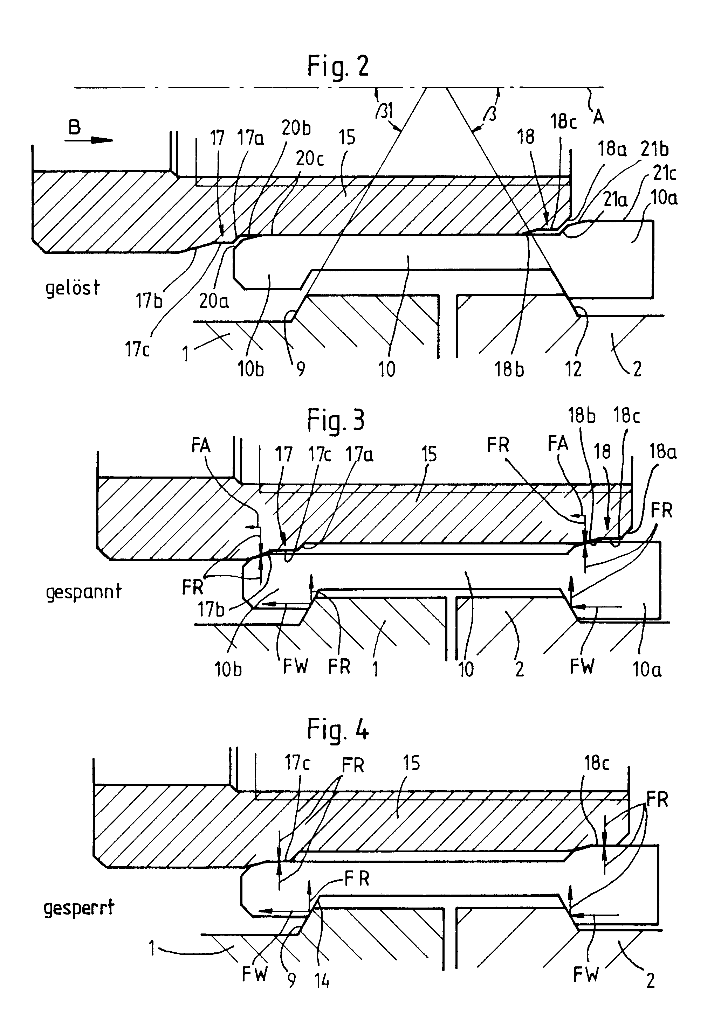

Wie insbesondere aus den Figuren 2 - 4 hervorgeht, ist jeweils zwischen den beiden konischen Flächenabschnitten 17a, 17b bzw. 18a, 18b der beiden Spannkegel 17, 18 ein zylindrischer Flächenabschnitt 17c bzw. 18c vorgesehen. Der Durchmesser D des zylindrischen Flächenabschnittes 17c ist so groß gewählt, daß die Spannklauenenden 10b sich mit ihren Spannflächen 14 in Eingriffstellung (Sperrstellung) mit der Nutflanke 9 des ersten Maschinenteiles 1 befinden, wenn ein bestimmter Abschnitt ihrer beim Spannvorgang mit den der Zentralachse zugewandten Innenflächen 20, 20b, 20c der Spannklauenenden 10b anliegt. Auch zwischen den beiden konischen Flächenabschnitten 18a, 18b des zweiten Spannkegels 18 ist ein zylindrischer Flächenabschnitt 18c vorgesehen, wobei diese Flächenabschnitte 18a, 18b, 18c mit Abschnitten 21a, 21b, 21c an den Innenflächen der ersten Spannklauenenden 10a beim Spannvorgang zusammenarbeiten.

Die Innenfläche jedes Spannklauenendes 10a 10b weist zweckmäßig einen achsparallelen Abschnitt 21c, 20c auf, der in Sperrstellung (Figur 4) am zugehörigen zylindrischen Flächenabschnitt 18c, 17c anliegt. Auf diese Weise wird zwischen den zylindrischen Flächenabschnitten 17c, 18c und den achsparallelen Abschnitten 20c, 21c jeweils Flächenberührung erreicht, wodurch die Flächenpressung und der Verschleiß gering gehalten werden.

Aus dem gleichen Grund schließen zweckmäßig die jeweils mit den konischen Flächenabschnitten 17a, 17b bzw. 18a, 18b zusammenwirkenden Abschnitte 20a, 20b bzw. 21a, 21b der Spannklauenenden 10b bzw. 10a mit der Zentralachse A den gleichen Winkel ein wie die konischen Flächenabschnitte 17a, 17b bzw. 18a, 18b, mit denen sie jeweils zusammenwirken.

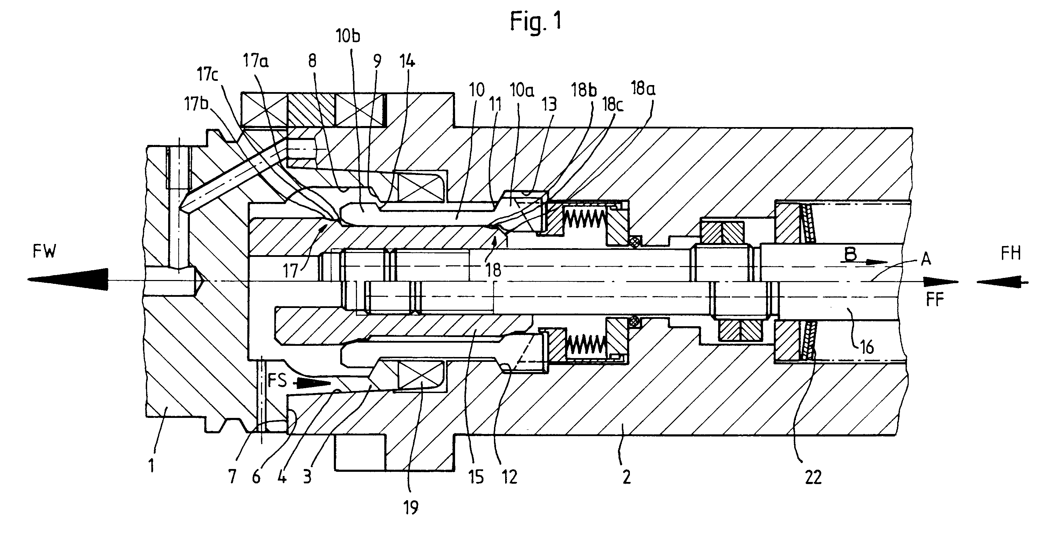

Die Wirkungsweise der neuen Spannvorrichtung ist folgende:
Zur Verbindung der beiden Maschinenteile 1, 2 wird das Maschinenteil 1 mit seinem Zentrier-Ansatz 3 in die Aufnahmebohrung 4 bei gelöster Spannvorrichtung eingesetzt, wie es in Figur 1, oben und Figur 2 dargestellt ist. Dann wird die Betätigungsstange 16 gemäß Figur 1 durch die Tellerfedern 22 nach rechts verschoben und nimmt dabei die Spannhülse 15 mit. Hierdurch werden die sich zunächst an den Flächenabschnitten 17a und 18a abstützenden Spannklauen 10 bei geringer Axialbewegung der Betätigungsstange 16 verhältnismäßig weit radial nach außen verschoben, wobei jede Spannklaue 10 parallel zu sich selbst und parallel zur Zentralachse A nach außen bewegt wird. Während dieser Verschiebung der Spannklauen 10 nach außen kommen ihre Spannflächen 14 an der Nutflanke 9 in Eingriff und ziehen das erste Maschinenteil 1 in Richtung zum zweiten Maschinenteil 2. Nachdem die Spannflächen 14 mit der Nutflanke 9 in Eingriffstellung sind, gelangen die zylindrischen Flächenabschnitte 17c bzw. 18c in Kontakt mit den achsparallelen Abschnitten 20c bzw. 21c der Spannklauenenden 10b bzw. 10a. Während die zylindrischen Flächenabschnitte 17c, 18c mit den Abschnitten 20c, 21c in Berührung sind, erfolgt keine weitere Bewegung der Spannklauen 10 radial nach außen. Bei weiterer Bewegung der Spannhülse 15 nach rechts kommen schließlich die konischen Flächenabschnitte 17b, 18b mit den entsprechenden Abschnitten 20b, bzw. 21b der Spannklauenenden 10b bzw. 10a in Berührung. Da diese Flächenabschnitte 17b und 18b in einem kleineren Winkel gegenüber der Zentralachse A geneigt sind, werden jetzt die Spannklauen 10 mit hoher Kraft radial nach außen gedrückt. Während der Verschiebung der Spannklauen 10 radial nach außen legen sich die an den zweiten Enden 10b vorgesehenen Spannflächen 14 an die Nutflanke 9 an. Die sich radial nach außen bewegende Spannfläche 14 wirkt auf die Nutflanke 9 ähnlich wie ein Keil ein und drückt den Ansatz 3 gemäß Figur 1 nach rechts. Hierdurch wird die Anlagefläche 6 fest an die Stirnfläche 7 in axialer Richtung angepreßt. Da die Spannklauen sich auch mit ihren ersten Enden 10a über geneigte Spannflächen 11 an der konischen Nutflanke 12 abstützen, bewegt sich jede Spannklaue 10 bei ihrer Radialbewegung auch axial in Richtung B nach rechts.

Zum Lösen der Spannvorrichtung wird die Betätigungsstange 16 entgegen der Pfeilrichtung B nach links gedrückt.

Wenn eine erhöhte Auszugs- oder Kippkraft FW auftritt, dann wirkt diese entgegen der Spannkraft FS. Infolge der Neigung der Nutflanke 9 und der Spannfläche 14 gegenüber der Zentralachse A erzeugt die Auszugskraft FW eine Radialkomponente FR an jeder Spannklaue 10, welche die Spannklaue radial nach innen drückt. Die radiale Kraftkomponente FR bewirkt infolge der Neigung der konischen Flächenabschnitte 17b, 18b gegenüber der Zentralachse axiale Kraftkomponenten FA. Sind diese axialen Kraftkomponenten FA bei überhöhter Auszugskraft FW größer als die Federkraft FF der Tellerfedern 22, dann wird die Spannhülse 15 entgegen der Federkraft F gemäß Figur 1 und Figur 3 nach links verschoben und zwar so lange, bis gemäß Figur 4 die achsparallelen Abschnitte 20c bzw. 21c an den zylindrischen Abschnitten 17c, bzw. 18c zur Anlage kommen. Wie aus Figur 4 ersichtlich ist, gibt es in dieser Sperrstellung keine axiale Kraftkomponente FA. Wegen fehlender axialer Kraftkomponente FA wird die Spannhülse 15 nicht weiter nach links verschoben und verbleibt in ihrer in Figur 4 dargestellten Sperrstellung. Da in dieser Sperrstellung die Spannfläche 14 noch in Eingriff mit der Nutflanke 9 ist, wird das Maschinenteil 1 weiterhin am Maschinenteil 2 gehalten, wenngleich die Verbindung etwas gelockert ist. Erst wenn die Federkraft FF durch die Kraft FH z.B. eines nicht dargestellten hydraulischen Zylinders gewollt überwunden wird, bewegt sich die Spannhülse gemäß Figur 1 bzw.

Figur 4 weiter nach links, wodurch schließlich die Teile der Spannvorrichtung in die in Figur 2 dargestellte Lösestellung gelangen und das Maschinenteil 1 von dem Maschinenteil 2 nach unten bzw. links entfernt werden kann.

Die Erfindung ist nicht nur bei der vorstehend beschriebenen Spannvorrichtung, bei welcher die Spannklauen parallel zu sich selbst bewegt werden, anwendbar, sondern auch bei Spannvorrichtungen mit Spannklauen, die beim Spannvorgang eine Schwenkbewegung ausführen, wie dies z.B. bei der Spannvorrichtung nach der DE 38 07 140 A1 der Fall ist.

**Patentansprüche**

1. Spannvorrichtung zum axialen Spannen zweier voneinander lösbarer Maschinenteile, insbesondere zum Spannen eines Werkzeugteiles in einer Werkzeugaufnahme, mit einem an dem ersten Maschinenteil (Werkzeug) vorgesehenen kegeligen oder zylindrischen, hohlen Zentrier-Ansatz, einer an den Ansatz anschließenden, senkrecht zur Zentralachse der Spannvorrichtung verlaufenden Anlagefläche, sowie einer innen im Ansatz vorgesehenen Ringnut, die eine sich zum freien Ansatzende hin konisch verjüngende Nutflanke aufweist, mit einer im zweiten Maschinenteil (Werkzeugaufnahme) vorgesehenen, dem Ansatz angepaßten Aufnahmebohrung, an die sich eine senkrecht zur Zentralachse erstreckende Stirnfläche anschließt, an welche die Anlagefläche anpreßbar ist, mit mehreren im zweiten Maschinenteil im wesentlichen parallel zur Zentralachse angeordneten Spannklauen, die sich jeweils mit ihrem einen, ersten Ende an einer Nutflanke einer im zweiten Maschinenteil vorgesehenen Ringnut abstützen, sowie mit einer im zweiten Maschinenteil axial beweglichen, radial innerhalb der Spannklauen angeordneten Spannhülse, die zumindest im Bereich der zweiten Enden der Spannklauen einen Spannkegel aufweist, dessen konische Mantelfläche zwei zueinander axial versetzte konische Flächenabschnitte aufweist, die beim Spannvorgang mit den der Zentralachse zugewandten Innenflächen der Spannklauenenden zusammenwirken, und mittels dem die zweiten Enden der Spannklauen radial nach außen bewegbar und an die Nutflanke des Ansatzes anpreßbar sind, **dadurch gekennzeichnet**, daß zwischen den beiden konischen Flächenabschnitten (17a, 17b) ein zylindrischer Flächenabschnitt (17c) vorgesehen ist, dessen Durchmesser (D) so groß ist, daß die Spannklauenenden (10b) selbsttätig in Eingriffsstellung (Sperrstellung) mit der Nutflanke (9) der Ringnut (8) des ersten Maschinenteiles (1) gehalten werden, wenn ein bestimmter Abschnitt (20c) ihrer Innenflächen (20a, 20b, 20c) an dem zylindrischen Flächenabschnitt (17c) anliegen.

2. Vorrichtung nach Anspruch 1, bei welcher im Bereich der ersten Enden der Spannklauen ein zweiter Spannkegel vorgesehen ist, der zwei zueinander axial versetzte, konische Flächenabschnitte aufweist, die mit den der Zentralachse zugewandten Innenflächen der Spannklauenenden zusammenwirken, **dadurch gekennzeichnet**, daß auch zwischen den beiden konischen Flächenabschnitten (18a, 18b) dieses zweiten Spannkegels (18) ein zylindrischer Flächenabschnitt (18c) vorgesehen ist.

3. Vorrichtung nach Anspruch 1 oder 2, **dadurch gekennzeichnet,** daß die Innenfläche jedes Spannklauenendes (10b, 10a) einen achsparallelen Abschnitt (20c, 21c) aufweist, der in Sperrstellung am zugehörigen zylindrischen Flächenabschnitt (17c, 18c) anliegt.

4. Vorrichtung nach Anspruch 1 oder 2, **dadurch gekennzeichnet**, daß jeder Spannkegel (17, 18) zwei in unterschiedlichen Winkeln zur Zentralachse (A) geneigte konische Flächenabschnitte (17a, 17b; 18a, 18b) aufweist, von denen die jeweils näher zur Stirnfläche (7) liegenden Flächenabschnitte (17b, 18b) einen kleineren Winkel mit der Zentralachse (A) einschließen als die jeweils entfernter liegenden anderen Flächenabschnitte (17a, 18a).

5. Vorrichtung nach mindestens einem der Ansprüche 1 - 4, **dadurch gekennzeichnet**, daß die jeweils mit den konischen Flächenabschnitten (17a, 17b; 18a, 18b) zusammenwirkenden Abschnitte (20a, 20b; 21a, 21b) der Innenflächen der Spannklauenenden (10b; 10a) mit der Zentralachse (A) den gleichen Winkel einschließen wie die konischen Flächenabschnitte (17a, 17b; 18a, 18b), mit denen sie jeweils zusammenwirken.

# Fig. 1

EP 0 471 197 A1

## Fig. 2

gelöst

## Fig. 3

gespannt

## Fig. 4

gesperrt

7

**Europäisches Patentamt**

# EUROPÄISCHER RECHERCHENBERICHT

Nummer der Anmeldung

# EP 91 11 1895

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-3 814 550 (OTT) <br> – – – | 1 | B 23 B 31/26 |
| A | DE-A-3 814 550 (* Spalte 3, Zeile 44 - Zeile 50 * ) <br> – – – | 4 | |
| Y | EP-A-0 027 282 (OERLIKON-BÜHRLE) <br> – – – | 1 | |
| A | EP-A-0 027 282 (* Seite 4, Zeile 21 - Zeile 26; Abbildung 1 *) <br> – – – | 2,3 | |
| A | DE-A-3 813 670 (OTT) <br> – – – | | |
| A | DE-A-3 504 381 (HERTEL) <br> – – – – – | | |

RECHERCHIERTE SACHGEBIETE (Int. Cl.5)

B 23 B

Der vorliegende Recherchenbericht wurde für alle Patentansprüche erstellt

| Recherchenort | Abschlußdatum der Recherche | Prüfer |
|---|---|---|
| Den Haag | 18 November 91 | BOGAERT F.L. |